# EUROPEAN PATENT SPECIFICATION

(11) **EP 2 055 106 B1**
(45) Date of publication and mention of the grant of the patent: **17.06.2015**
(21) Application number: 07868329.9
(22) Date of filing: 14.08.2007
(51) Int. Cl.: H04N 19/132, H04N 19/31, H04N 19/33, H04N 19/70, H04N 19/59, H04N 19/587, H04N 21/2343, H04N 21/845

(54) **TECHNIQUES FOR VARIABLE RESOLUTION ENCODING AND DECODING OF DIGITAL VIDEO**
VERFAHREN ZUR KODIERUNG UND DEKODIERUNG DIGITALER VIDEOS MIT VARIABLER AUFLÖSUNG
TECHNIQUES DE CODAGE ET DÉCODAGE EN RÉSOLUTION VARIABLE DE VIDÉO NUMÉRIQUE

(30) Priority: 16.08.2006 US 504843
(43) Date of publication of application: 06.05.2009
(73) Proprietor: Microsoft Technology Licensing, LLC, Redmond, WA 98052 (US)
(72) Inventor: BARKLEY, Warren V., Redmond, Washington 98052-6399 (US); CHOU, Philip A., Redmond, Washington 98052-6399 (US); CRINON, Regis J., Redmond, Washington 98052-6399 (US); MOORE, Tim, Redmond, Washington 98052-6399 (US)
(74) Representative: Grünecker Patent- und Rechtsanwälte PartG mbB
(86) International application number: PCT/US2007/075907
(87) International publication number: WO 2008/060732

(56) References cited:
- EP-A1- 1 465 427
- WO-A1-2004/056112
- WO-A2-03/063499
- US-A1- 2005 094 726
- US-A1- 2006 078 049
- US-A1- 2006 165 302
- US-B1- 6 233 356
- WENGER Y-K WANG T SCHIERL S: "RTP Payload Format for SVC Video; draft-wenger-avt-rtp-svc-02.txt", 20060601, no. 2, 1 June 2006 (2006-06-01), XP015045247, ISSN: 0000-0004
- STEPHAN WENGER ET AL: "RTP payload format for H.264/SVC scalable video coding", JOURNAL OF ZHEJIANG UNIVERSITY SCIENCE A; AN INTERNATIONAL APPLIED PHYSICS & ENGINEERING JOURNAL, SPRINGER, BERLIN, DE, vol. 7, no. 5, 1 May 2006 (2006-05-01), pages 657-667, XP019385025, ISSN: 1862-1775, DOI: 10.1631/JZUS.2006.A0657
- WENGER M M HANNUKSELA T STOCKHAMMER M WESTERLUND D SINGER S: "RTP Payload Format for H.264 Video; rfc3984.txt", 20050201, 1 February 2005 (2005-02-01), XP015009755, ISSN: 0000-0003

## Description

Digital video consumes large amounts of storage and transmission capacity. A typical raw digital video sequence includes 15, 30 or even 60 frames per second (frame/s). Each frame can include hundreds of thousands of pixels. Each pixel or pel represents a tiny element of the picture. In raw form, a computer commonly represents a pixel with 24 bits, for example. Thus a bitrate or number of bits per second of a typical raw digital video sequence can be on the order of 5 million bits per second (bit/s) or more.

Most media processing devices and communication networks lack the resources to process raw digital video. For this reason, engineers use compression (also called coding or encoding) to reduce the bitrate of digital video. Decompression (or decoding) reverses compression.

Typically there are design tradeoffs in selecting a particular type of video compression for a given processing device and/or communication network. For example, compression can be lossless where the quantity of the video remains high at the cost of a higher bitrate, or lossy where the quality of the video suffers but decreases in bitratc are more dramatic. Most system designs make some compromises between quality and bitrate based on a given set of design constraints and performance requirements. Consequently, a given video compression technique is typically not suitable for different types of media processing devices and/or communicution networks.

Stephan Wenger et al: "RTP Payload Format for H.264/SVC Scalable Video Coding", Journal of Zhejiang University Science A; An International Applied Physics & Engineering Journal, Springer, Berlin, De, Vol. 7, No. 5, 1 May 2006, pages 657-667 discloses a scalable video bit stream that contains non-scalable base layer and one or more enhancement layers. An enhancement layer may enhance the temporal resolution, the spatial resolution, or the quality of the video content represented by the lower layer or part of it.

Wenger, Wang, Schierl: "RTP Payload Format for SVC Video; draft-wenger-avt-rtp-svc-02.txt", 20060601, no. 2, 1 June 2006 specifies an RTP payload format for a forthcoming new mode of the H.264/AVC video code, known as scalable video coding.

Wenger, Hannuksela, Stockhammer, Westerlund, Singer: "RTP Payload Format for H.264 Video; rfc3984.txt", 1 February 2005 describes an RTP payload format for the ITU-T recommendation H.264 video codec and the technically identical ISO/IEC international standard 14496-10 video codec.

EP 1 465 427 A1 describes exemplary systems and related methods for fully scalable encryption of scalable multimedia.

WO 2004/056112 A1 describes a method and system for encrypting a data stream. The video data stream partitioned into units is based upon a type of data contained within the units.

US 6,233,356 B1 relates to generalized scalability for a video coder based on video objects.

WO 03/063499 A2 relates to methods and systems for start code emulation prevention and data stuffing.

It is therefore the object of the invention to provide an improved method for encoding video information into a video stream, a corresponding method for decoding and corresponding apparatuses for encoding or decoding.

This object is solved by the subject matter of the independent claims.

Preferred embodiments are defined by the dependent claims.

This Summary is provided to introduce a selection, of concepts in a simplified form that are further described below in the Detailed Description. This Summary is not intended to identify key features or essential features of the claimed subject matter, nor is it intended to be used to limit the scope of the claimed subject matter.

Various embodiments are generally directed to digital encoding, decoding and processing of digital media content, such as video, images, pictures, and so forth. In some embodiments, the digital encoding, decoding and processing of digital media content may be based on the Society of Motion Picture and Television Engineers

(SMPTE) standard 421M ("VC-1") video codec series of standards and variants. More particularly, some embodiments are directed to multiple resolution video encoding and decoding techniques and how such techniques are enabled in the VC-1 bitstream without breaking backward compatibility. In one embodiment, for example, an apparatus may include a video encoder arranged to compress or encode digital video information into an augmented SMPTE VC-1 video stream or bitstream. The video encoder may encode the digital video information in the form of multiple layers, such as a base layer and one or more spatial and/or temporal enhancement layers. The base layer may offer a defined minimum degree of spatial resolution and a base level of temporal resolution. One or more enhancement layers may include encoded video information that may be used to increase the base level of spatial resolution and/or the base level of temporal resolution for the video information encoded into the base layer. A video decoder may selectively decode video information from the base layer and one or more enhancement layers to playback or reproduce the video information at a desired level of quality. Likewise, an Audio Video Multipoint Control Unit (AVMCU) may select to forward video information from the base layer and one or more enhancement layers to a conference participant based on information such as network bandwidth currently available and receiver's decoding capability. Other embodiments are described and claimed.

### BRIEF DESCRIPTION OF THE DRAWINGS

**FIG. 1** illustrates an embodiment for a video capture and playback system.
**FIG. 2** illustrates an embodiment for a general video encoder system.
**FIG. 3** illustrates an embodiment for a general video decoder system.
**FIG. 4** illustrates an embodiment for a video layer hierarchy.
**FIG. 5** illustrates an embodiment for a first video stream.
**FIG. 6** illustrates an embodiment for a second video stream.
**FIG. 7** illustrates an embodiment for a third video stream.
**FIG. 8** illustrates an embodiment for a fourth video stream.
**FIG. 9** illustrates an embodiment for a logic flow.
**FIG. 10** illustrates an embodiment for a first modified video system.
**FIG. 11** illustrates an embodiment for a second modified video system.
**FIG. 12** illustrates an embodiment for a computing environment.

### DETAILED DESCRIPTION

Various media processing devices may implement a video coder and/or decoder (collectively referred to as a "codec") to perform a certain level of compression for digital media content such as digital video. A selected level of compression may vary depending upon a number of factors, such as a type of video source, a type of video compression technique, a bandwidth or protocol available for a communication link, processing or memory resources available for a given receiving device, a type of display device used to reproduce the digital video, and so forth. Once implemented, a media processing device is typically limited to the level of compression set by the video codec, for both encoding and decoding operations. This solution typically provides very little flexibility. If different levels of compression are desired, a media processing device typically implements a different video codec for each level of compression. This solution may require the use of multiple video codecs per media processing device, thereby increasing complexity and cost for the media processing device.

To solve these and other problems, various embodiments may be directed to multiple resolution encoding and decoding techniques. A scalable video encoder may encode digital video information as multiple video layers within a common video stream, where each video layer offers one or more levels of spatial resolution and/or temporal resolution. The video encoder may multiplex digital video information for multiple video layers, such as a base layer and enhancement layers, into a single common video stream. A video decoder may demultiplex or selectively decode video information from the common video stream to retrieve video information from the base layer and one or more enhancement layers to playback or reproduce the video information with a desired level of quality, typically defined in terms of a signal-to-noise ratio (SNR) or other metrics. The video decoder may selectively decode the video information using various start codes as defined for each video layer. Likewise, an AVMCU may select to forward the base layer and only a subset of the enhancements layer to one or more participants based on information like current bandwidth available and decoder capability. The AVMCU selects the layers using start codes in the video bitstream.

Spatial resolution may refer generally to a measure of accuracy with respect to the details of the space being measured. In the context of digital video, spatial resolution may be measured or expressed as a number of pixels in a frame, picture or image. For example, a digital image size of 640 x 480 pixels equals 326,688 individual pixels. In general, images having higher spatial resolution are composed with a greater number of pixels than those of lower spatial resolution. Spatial resolution may affect, among other things, image quality for a video frame, picture, or image.

Temporal resolution may generally refer to the accuracy of a particular measurement with respect to time. In the context of digital video, temporal resolution may be measured or expressed as a frame rate, or a number of frames of video information captured per second, such as 15 frame/s, 30 frame/s, 60 frame/s, and so forth. In general, a higher temporal resolution refers to a greater number of frames/s than those of lower temporal resolution. Temporal resolution may affect, among other things, motion rendition for a sequence of video images or frames. A video stream or bitstream may refer to a continuous sequence of segments (e.g., bits or bytes) representing audio and/or video information.

In one embodiment, for example, a scalable video encoder may encode digital video information as a base layer and one or more temporal and/or spatial enhancement layers. The base layer may provide a base or minimum level of spatial resolution and/or temporal resolution for the digital video information. The temporal and/or spatial enhancement layers may provide scaled enhanced levels of video spatial resolution and/or level of temporal resolutions for the digital video information. Various types of entry points and start codes may be defined to delineate the different video layers within a video stream. In this manner, a single scalable video encoder may provide and multiplex multiple levels of spatial resolution and/or temporal resolution in a single video stream.

In various embodiments, a number of different video decoders may selectively decode digital video information from a given video layer of the encoded video stream to provide a desired level of spatial resolution and/or temporal resolution for a given media processing device. For example, one type of video decoder may be capable of decoding a base layer from a video stream, while another type of video decoder may be capable of decoding a base layer and one or more enhanced layers from a video stream. A media processing device may combine the digital video information decoded from each video layer in various ways to provide different levels of video quality in terms of spatial resolution and/or temporal resolutions. The media processing device may then reproduce the decoded digital video information at the selected level of spatial resolution and temporal resolution on one or more displays.

A scalable or multiple resolution video encoder and decoder may provide several advantages over conventional video encoders and decoders. For example, various scaled or differentiated digital video services may be offered using a single scalable video encoder and one or more types of video decoders. Legacy video decoders may be capable of decoding digital video information from a base layer of a video stream without necessarily having access to the enhancement layers, while enhanced video decoders may be capable of accessing both a base layer and one or more enhanced layers within the same video stream. In another example, different encryption techniques may be used for each layer, thereby controlling access to each layer. Similarly, different digital rights may be assigned to each layer to authorize access to each layer. In yet another example, a level of spatial and/or temporal resolution may be increased or decreased based on a type of video source, a type of video compression technique, a bandwidth or protocol available for a communication link, processing or memory resources available for a given receiving device, a type of display device used to reproduce the digital video, and so forth.

In particular, this improved variable video coding resolution implementation has the advantage of carrying parameters that specify the dimensions of the display resolution within the video stream. Coding resolutions for a portion of the video is signaled at the entry point level. The entry points are adjacent to, or adjoining, one or more subsequences or groups of pictures of the video sequence that begins with an intra-coded frame (also referred to as an "I-frame"), and also may contain one or more predictive-coded frames (also referred to as a "P-frame" or "B-frame") that are predictively coded relative to that intra-coded frame. The coding resolution signaled at a given entry point thus applies to a group of pictures that includes an I-frame at the base layer and the P-frames or B-frames that reference the I-frame.

The following description is directed to implementations of an improved variable coding resolution technique that permits portions of a video sequence to be variably coded at different resolutions. An exemplary application of this technique is in a video codec system. Accordingly, the variable coding resolution technique is described in the context of an exemplary video encoder/decoder utilizing an encoded bit stream syntax. In particular, one described implementation of the improved variable coding resolution technique is in a video codec that complies with the advanced profile of the SMPTE standard 421M (VC-1) video codec series of standards and variants. Alternatively, the technique can be incorporated in various video codec implementations and standards that may vary in details from the below described exemplary video codec and syntax.

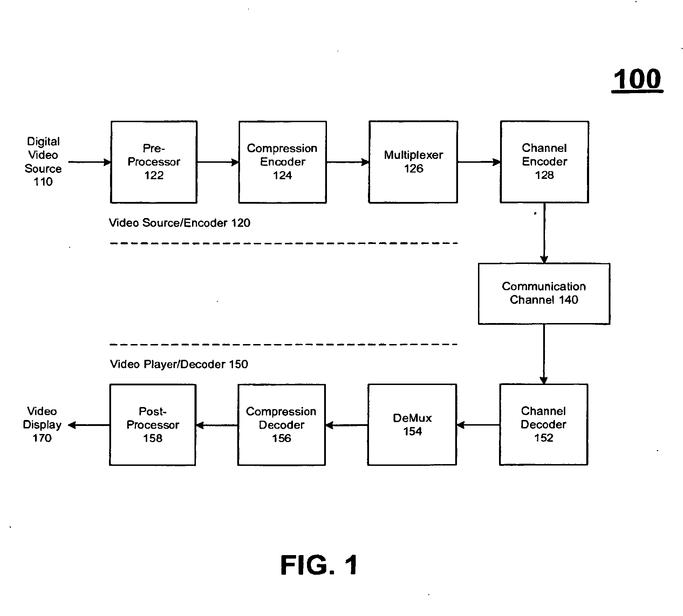

FIG. 1 illustrates an implementation for a video capture and playback system 100. FIG. 1 illustrates the video capture and playback system 100 employing a video codec in which the variable coding resolution technique is implemented in a typical application or use scenario. The video capture and playback system 100 generally includes a video source/encoder 120 that captures and encodes video content from an input digital video source 110 into a compressed video bit stream on a communication channel 140, and a video player/decoder 150 that receives and decodes the video from the channel and displays the video on a video display 170. Some examples of such systems in which the below described video codec with variable coding resolution can be implemented encompass systems in which the video capture, encoding, decoding and playback are all performed in a single machine, as well as systems in which these operations are performed on separate, geographically distant machines. For example, a digital video recorder, or personal computer with a TV tuner card, can capture a video signal and encode the video to hard drive, as well as read back, decode and display the video from the hard drive on a monitor. As another example, a commercial publisher or broadcaster of video can use a video mastering system incorporating the video encoder to produce a video transmission (e.g., a digital satellite channel, or Web video stream) or a storage device (e.g., a tape or disk) carrying the encoded video, which is then used to distribute the video to user's decoder and playback machines (e.g., personal computer, video player, video receiver, etc.).

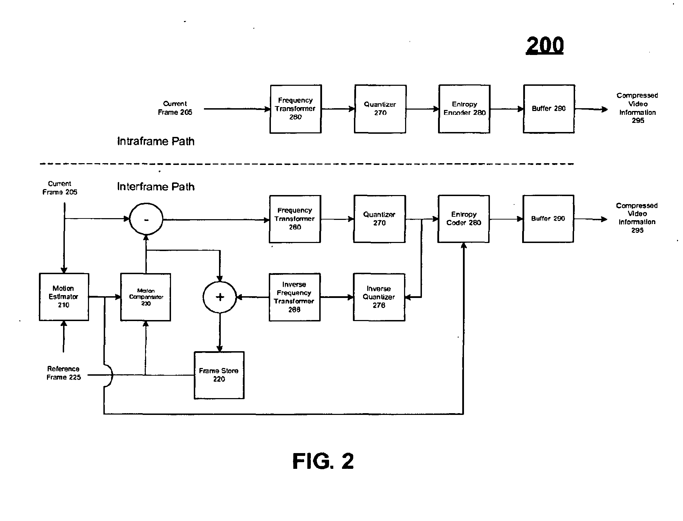

In the illustrated system 100, a video source/encoder 120 includes a source pre-processor 122, a source compression encoder 124, a multiplexer 126 and a channel encoder 128. The pre-processor 122 receives uncompressed digital video from a digital video source 110, such as a video camera, analog television capture, or other sources, and processes the video for input to the compression encoder 124. The compression encoder 124, an example of which is the video encoder 200 as described with reference to FIG. 2, performs compression and encoding of the video. The multiplexer 126 packetizes and delivers the resulting compressed video bit stream to the channel encoder 128 for encoding onto the communication channel 140. The communication channel 140 can be a video transmission, such as digital television broadcast, satellite or other over-the-air transmission; or cable, telephone or other wired transmission, and so forth. The communications channel 140 can also be recorded video media, such as a computer hard drive or other storage disk; tape, optical disk (DVD) or other removable recorded medium. The channel encoder 128 encodes the compressed video bit stream into a file container, transmission carrier signal or the like.

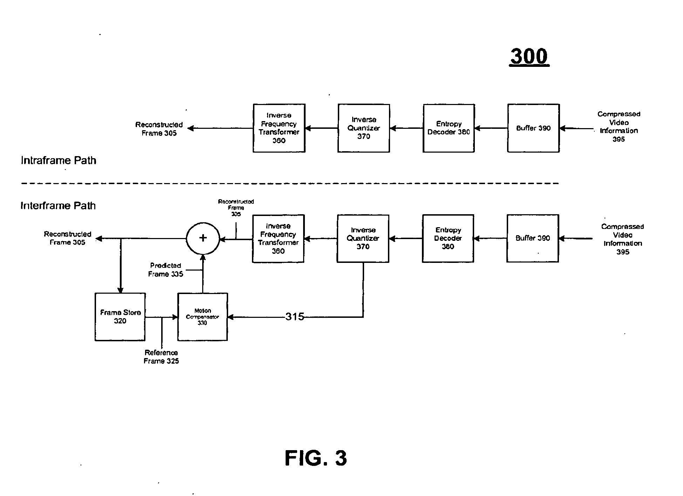

At the video player/decoder 150, a channel decoder 152 decodes the compressed video bit stream on the communication channel 140. A demultiplexer 154 demultiplexes and delivers the compressed video bit stream from the channel decoder to a compression decoder 156, an example of which is the video decoder 300 as described with reference to FIG. 3. The compression decoder then decodes and reconstructs the video from the compressed video bit stream. Finally, the post-processor 158 processes the video to be displayed on a video display 170. Examples of post processing operations include de-blocking, de-ringing or other artifact removal, range remapping, color conversion and other like operations.

FIG. 2 is a block diagram of a generalized video encoder 200, and FIG. 3 is a block diagram of a generalized video decoder 300, in which the variable coding resolution technique can be incorporated. The relationships shown between modules within the encoder and decoder indicate the main flow of information in the encoder and decoder, while other relationships are omitted for the sake of clarity. In particular, FIGS. 2 and 3 usually do not show side information indicating the encoder settings, modes, tables, and so forth, as used for a video sequence, frame, macroblock, block, and so forth. Such side information is sent in the output bitstream, typically after entropy encoding of the side information. The format of the output bitstream can be, for example, a SMPTE VC-1 format, a SMPTE VC-1 format adapted for Real Time Communications, an H.263 format, an H.264 format or other video formats.

In one embodiment, for example, the encoder 200 and decoder 300 are block-based and use a 4:2:0 macroblock format with each macroblock including 4 luminance 8 x 8 luminance blocks (at times treated as one 16 x 16 macroblock) and two 8 x 8 chrominance blocks. Alternatively, the encoder 200 and decoder 300 are object-based, use a different macroblock or block format, or perform operations on sets of pixels of different size or configuration than 8 x 8 blocks and 16 x 16 macroblocks. The macroblock may be used to represent either progressive or interlaced video content.

The scalable video encoding and decoding techniques and tools in the various embodiments can be implemented in a video encoder and/or decoder. Video encoders and decoders may contain within them different modules, and the different modules may relate to and communicate with one another in many different ways. The modules and relationships described below are by way of example and not limitation. Depending on implementation and the type of compression desired, modules of the video encoder or video decoder can be added, omitted, split into multiple modules, combined with other modules, and/or replaced with like modules. In alternative embodiments, video encoders or video decoders with different modules and/or other configurations of modules may perform one or more of the described techniques.

In general, video compression techniques include intraframe compression and interframe compression. Intraframe compression techniques compress individual frames, typically called I-frames, key frames, or reference frames. Interframe compression techniques compress frames with reference to preceding and/or following frames, and are called typically called predicted frames. Examples of predicted frames include a Predictive (P) frame, a Super Predictive (SP) frame, and a Bi-Predictive or Bi-Directional (B) frame. A predicted frame is represented in terms of motion compensated prediction (or difference) from one or more other frames. A prediction residual is the difference between what was predicted and the original frame. In contrast, an I-frame or key frame is compressed without reference to other frames.

A video encoder typically receives a sequence of video frames including a current frame and produces compressed video information as output. The encoder compresses predicted frames and key frames. Many of the components of the encoder are used for compressing both key frames and predicted frames. The exact operations performed by those components can vary depending on the type of information being compressed.

**FIG. 2** is a block diagram of a general video encoder system 200. The encoder system 200 receives a sequence of video frames including a current frame 205, and produces compressed video information 295 as output. Particular embodiments of video encoders typically use a variation or supplemented version of the generalized encoder 200.

The encoder system 200 compresses predicted frames and key frames. For the sake of presentation, FIG. 2 shows a path for key frames through the encoder system 200 and a path for forward-predicted frames. Many of the components of the encoder system 200 are used for compressing both key frames and predicted frames. The exact operations performed by those components can vary depending on the type of information being compressed.

A predicted frame (e.g., P-frame, SP-frame, and B-frame) is represented in terms of prediction (or difference) from one or more other frames. A prediction residual is the difference between what was predicted and the original frame. In contrast, a key frame (e.g., I-frame) is compressed without reference to other frames.

If the current frame 205 is a forward-predicted frame, a motion estimator 210 estimates motion of macroblocks or other sets of pixels (e.g., 16 x 8, 8 x 16 or 8 x 8 blocks) of the current frame 205 with respect to a reference frame, which is the reconstructed previous frame 225 buffered in the frame store 220. In alternative embodiments, the reference frame is a later frame or the current frame is bidirectionally predicted. The motion estimator 210 outputs as side information motion information 215 such as motion vectors. A motion compensator 230 applies the motion information 215 to the reconstructed previous frame 225 to form a motion-compensated current frame 235. The prediction is rarely perfect, however, and the difference between the motion-compensated current frame 235 and the original current frame 205 is the prediction residual 245. Alternatively, a motion estimator and motion compensator apply another type of motion estimation/compensation.

A frequency transformer 260 converts the spatial domain video information into frequency domain (i.e., spectral) data. For block-based video frames, the frequency transformer 260 applies a transform described in the following sections that has properties similar to the discrete cosine transform (DCT). In some embodiments, the frequency transformer 260 applies a frequency transform to blocks of spatial prediction residuals for key frames. The frequency transformer 260 can apply an 8 x 8, 8 x 4, 4 x 8, or other size frequency transforms.

A quantizer 270 then quantizes the blocks of spectral data coefficients. The quantizer applies uniform, scalar quantization to the spectral data with a step-size that varies on a frame-by-frame basis or other basis. Alternatively, the quantizer applies another type of quantization to the spectral data coefficients, for example, a non-uniform, vector, or non-adaptive quantization, or directly quantizes spatial domain data in an encoder system that does not use frequency transformations. In addition to adaptive quantization, the encoder 200 can use frame dropping, adaptive filtering, or other techniques for rate control.

When a reconstructed current frame is needed for subsequent motion estimation/compensation, an inverse quantizer 276 performs inverse quantization on the quantized spectral data coefficients. An inverse frequency transformer 266 then performs the inverse of the operations of the frequency transformer 260, producing a reconstructed prediction residual (for a predicted frame) or a reconstructed key frame. If the current frame 205 was a key frame, the reconstructed key frame is taken as the reconstructed current frame. If the current frame 205 was a predicted frame, the reconstructed prediction residual is added to the motion-compensated current frame 235 to form the reconstructed current frame. The frame store 220 buffers the reconstructed current frame for use in predicting the next frame. In some embodiments, the encoder applies a de-blocking filter to the reconstructed frame to adaptively smooth discontinuities in the blocks of the frame.

The entropy coder 280 compresses the output of the quantizer 270 as well as certain side information (e.g., motion information 215, quantization step size). Typical entropy coding techniques include arithmetic coding, differential coding, Huffman coding, run length coding, LZ coding, dictionary coding, and combinations of the above. The entropy coder 280 typically uses different coding techniques for different kinds of information (e.g., DC coefficients, AC coefficients, different kinds of side information), and can choose from among multiple code tables within a particular coding technique.

The entropy coder 280 puts compressed video information 295 in the buffer 290. A buffer level indicator is fed back to bitrate adaptive modules. The compressed video information 295 is depleted from the buffer 290 at a constant or relatively constant bitrate and stored for subsequent streaming at that bitrate. Alternatively, the encoder 200 streams compressed video information immediately following compression.

Before or after the buffer 290, the compressed video information 295 can be channel coded for transmission over the network. The channel coding can apply error detection and correction data to the compressed video information 295.

**FIG. 3** is a block diagram of a general video decoder system 300. The decoder system 300 receives information 395 for a compressed sequence of video frames and produces output including a reconstructed frame 305. Particular embodiments of video decoders typically use a variation or supplemented version of the generalized decoder 300.

The decoder system 300 decompresses predicted frames and key frames. For the sake of presentation, FIG. 3 shows a path for key frames through the decoder system 300 and a path for forward-predicted frames. Many of the components of the decoder system 300 are used for compressing both key frames and predicted frames. The exact operations performed by those components can vary depending on the type of information being compressed.

A buffer 390 receives the information 395 for the compressed video sequence and makes the received information available to the entropy decoder 380. The buffer 390 typically receives the information at a rate that is fairly constant over time, and includes a jitter buffer to smooth short-term variations in bandwidth or transmission. The buffer 390 can include a playback buffer and other buffers as well. Alternatively, the buffer 390 receives information at a varying rate. Before or after the buffer 390, the compressed video information can be channel decoded and processed for error detection and correction.

The entropy decoder 380 entropy decodes entropy-coded quantized data as well as entropy-coded side information (e.g., motion information, quantization step size), typically applying the inverse of the entropy encoding performed in the encoder. Entropy decoding techniques include arithmetic decoding, differential decoding, Huffman decoding, run length decoding, LZ decoding, dictionary decoding, and combinations of the above. The entropy decoder 380 frequently uses different decoding techniques for different kinds of information (e.g., DC coefficients, AC coefficients, different kinds of side information), and can choose from among multiple code tables within a particular decoding technique.

If the frame 305 to be reconstructed is a forward-predicted frame, a motion compensator 330 applies motion information 315 to a reference frame 325 to form a prediction 335 of the frame 305 being reconstructed. For example, the motion compensator 330 uses a macroblock motion vector to find a corresponding macroblock in the reference frame 325. The prediction 335 is therefore a set of motion compensated video blocks from the previously decoded video frame. A frame buffer 320 stores previous reconstructed frames for use as reference frames. Alternatively, a motion compensator applies another type of motion compensation. The prediction by the motion compensator is rarely perfect, so the decoder 300 also reconstructs prediction residuals.

When the decoder needs a reconstructed frame for subsequent motion compensation, the frame store 320 buffers the reconstructed frame for use in predicting the next frame. In some embodiments, the encoder applies a de-blocking filter to the reconstructed frame to adaptively smooth discontinuities in the blocks of the frame.

An inverse quantizer 370 inverse quantizes entropy-decoded data. In general, the inverse quantizer applies uniform, scalar inverse quantization to the entropy-decoded data with a step-size that varies on a frame-by-frame basis or other basis. Alternatively, the inverse quantizer applies another type of inverse quantization to the data, for example, a non-uniform, vector, or non-adaptive quantization, or directly inverse quantizes spatial domain data in a decoder system that does not use inverse frequency transformations.

An inverse frequency transformer 360 converts the quantized, frequency domain data into spatial domain video information. For block-based video frames, the inverse frequency transformer 360 applies an inverse transform described in the following sections. In some embodiments, the inverse frequency transformer 360 applies an inverse frequency transform to blocks of spatial prediction residuals for key frames. The inverse frequency transformer 360 can apply an 8 x 8, 8 x 4, 4 x 8, or other size inverse frequency transforms.

The variable coding resolution technique permits the decoder to maintain a desired video display resolution, while allowing the encoder the flexibility to choose to encode some portion or portions of the video at multiple levels of coded resolution that may be different from the display resolution. The encoder can code some pictures of the video sequence at lower coded resolutions to achieve a lower encoded bit-rate, display size or display quality. When desired to use the lower coding resolution, the encoder filters and down-samples the picture(s) to the lower resolution. At decoding, the decoder selectively decodes those portions of the video stream with the lower coding resolution for display at the display resolution. The decoder may also up-sample the lower resolution of the video before it is displayed on a screen with large pixel addressability. Similarly, the encoder can code some pictures of the video sequence at higher coded resolutions to achieve a higher encoded bit-rate, display size or display quality. When desired to use the higher coding resolution, the encoder filter retains a larger portion of the original video resolution. This is typically done by encoding an additional layer representing the difference between the video with larger resolution and the version of the lower resolution layer interpolated to match the size of the larger resolution video. For example, an original video may have a horizontal and vertical pixel resolution of 640 and 480 pixels, respectively. The encoded base layer may have 160 x 120 pixels. The first spatial enhancement layer may provide a resolution of 320 x 240 pixels. This spatial enhancement layer can be obtained by down-sampling the original video by a factor of 2 along the horizontal and vertical resolution. It is encoded by calculating the difference between the 320 x 240 video and the 160 x 120 base layer interpolated by a factor of 2 horizontally and vertically to match the 320 x 240 resolution of the first enhancement layer. At decoding, the decoder selectively decodes those portions of the video stream with the base and the higher spatial coding resolution for display at the display resolution or to supply a larger degree of details in the video, regardless of the resolution for the display.

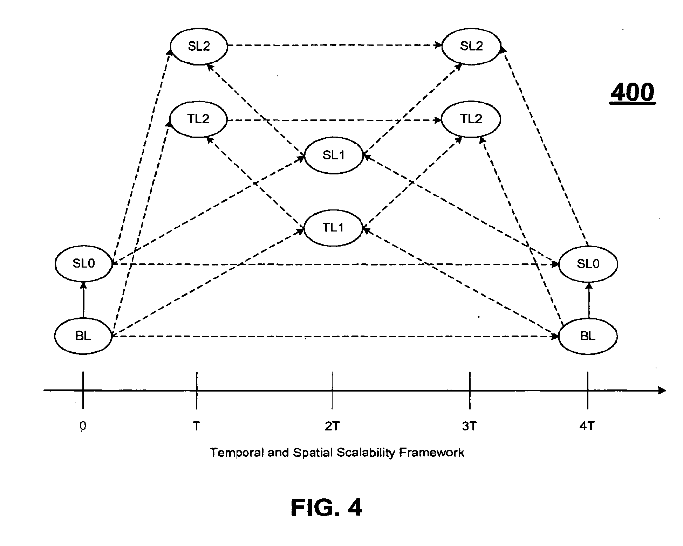

In various embodiments, the video encoder 200 may provide variable coding resolutions on a frame-by-frame or other basis. The various levels of coding resolutions may be organized in the form of multiple video layers, with each video layer providing a different level of spatial resolution and/or temporal resolution for a given set of video information. For example, the video encoder 200 may be arranged to encode video information into a video stream with a base layer and an enhancement layer. The video information may comprise, for example, one or more frame sequences, frames, images, pictures, stills, blocks, macroblocks, sets of pixels, or other defined set of video data (collectively referred to as "frames"). The base layer may have a first level of spatial resolution and a first level of temporal resolution. The enhancement layer may increase the first level of spatial resolution, the first level of temporal resolution, or both. There may be multiple enhancement layers to provide a desired level of granularity when improving spatial resolution or temporal resolution for a given set of video information. The video layers may be described in more detail with reference to FIG. 4.

**FIG. 4** illustrates an exemplary embodiment of a video layer hierarchy. FIG. 4 illustrates a hierarchical representation of multiple independent video layers 400 of coded digital video within a video stream. As shown in FIG. 4, the video layers 400 may comprise a base layer (BL). The BL may represent a base level of spatial resolution and a base level of temporal resolution (e.g., frame rate) video stream. In one embodiment, for example, a base level of temporal resolution may comprise T frame/s, where T = 15 frames. The encoding of the video is such that decoding of subsequent BL video frames is only dependent on previous video frames from the same layer (e.g., one or more P, SP or B frames in the base layer).

The video layers 400 may also comprise one or more enhanced layers. For example, the enhanced layers may include one or more spatial enhancement layers, such as a first spatial enhancement layer (SL0), a second spatial enhancement layer (SL1), and a third spatial enhancement layer (SL2). SL0 represents a spatial enhancement layer which can be added to the BL to provide a higher resolution video at the same frame rate as the BL sequence (e.g., 15 frame/s). SL1 represents a spatial enhancement layer which can be added to the BL to provide a higher resolution video at a medium frame rate that is higher than the BL sequence. In one embodiment, for example, a medium frame rate may comprise T/2 frame/s, where T = 30 frames. SL2 is a spatial enhancement layer which can be added to the BL to provide a higher resolution video at a higher frame rate that is even higher than the BL sequence. In one embodiment, for example, a higher frame rate may comprise T frame/s, where T = 60 frames. It may be appreciated that the values given for T are by way of example only and not limitation.

The enhanced layers may also include one or more temporal enhancement layers, such as a first temporal enhancement layer (TL1) and a second temporal enhancement layer (TL2). TL1 represents a temporal enhancement layer which can be added to BL to produce the same lower resolution video as the BL but at a frame rate which is twice the frame rate for BL frames. As a result, motion rendition is improved in this sequence. TL2 represents a temporal enhancement layer which doubles the frame rate of BL and TL1. Motion rendition at this level is better than BL or TL1.

There are many combinations available for using the base layer and enhancement layers, as is indicated by the dashed arrows in FIG. 4. Some combinations may include, by way of example and not limitation, the following combinations:
- BL
- BL+SL0
- BL+TL1
- BL+TL1+TL2
- BL+SL0+TL1+SL1
- BL+SL0+TL1+SL1+TL2+SL2

These and other video layer combinations may ensure that the video quality is consistent in time. In some cases, it may be desirable to select the same number of spatial enhancement layers for all temporal layers so video quality is consistent in time.

As described more fully below, the encoder 200 specifies the maximum resolution in a sequence header within the compressed video bit stream 295 (FIG. 2). Coding the level of coding resolution in the sequence header of the video bit stream as compared to header information carried outside the bit stream, such as in header information of a container file format, or transmission carrier format, has the advantage that the maximum resolution is directly decodable by the video decoder. The maximum resolution does not have to be separately passed to the video decoder by the container file or transmission carrier decoder (e.g., channel decoder 152).

The encoder 200 further signals that a group of one or more pictures following an entry point in the video bit-stream is coded at a lower resolution using a defined flag or start code in the entry point header. In some embodiments, if the flag indicates a lower or higher coding resolution, the coded size may also be coded in the entry point header as well.

The compressed video bitstream 295 (FIG. 2) includes information for a sequence of compressed progressive video frames or other pictures (e.g., interlace frame or interlace field format pictures). The bitstream 295 is organized into several hierarchical layers that are decoded by a decoder such as the decoder 300 of FIG. 3. The highest layer is the sequence layer, which has information for the overall sequence of frames. Additionally, each compressed video frame is made up of data that is structured into three hierarchical layers: picture, macroblock, and block (from top to bottom). Alternative video implementations employing the variable coding resolution technique can utilize other syntax structures having various different compositions of syntax elements.

Further, the compressed video bit stream can contain one or more entry points. Valid entry points in a bitstream are locations in an elementary bitstream from which a media processing system can decode or process the bitstream without the need of any preceding information (bits) in the bitstream. The entry point header (also called Group of Pictures header) typically contains critical decoder initialization information such as horizontal and vertical sizes of the video frames, required elementary stream buffer states and quantizer parameters, for example. Frames that can be decoded without reference to preceding frames are referred to as independent or key frames.

An entry point is signaled in a bitstream by an entry point indicator. The purpose of an entry point indicator is to signal the presence of a special location in a bitstream to begin or resume decoding, for example, where there is no dependency on past decoded video fields or frames to decode the video frame following immediately the entry point indicator. Entry point indicators and associated entry point structures can be inserted at regular or irregular intervals in a bitstream. Therefore, an encoder can adopt different policies to govern the insertion of entry point indicators in a bitstream. Typical behavior is to insert entry point indicators and structures at regular frame locations in a video bitstream, but some scenarios (e.g., error recovery or fast channel change) can alter the periodic nature of the entry point insertion. As an example, see Table 1 below for the structure of an entry point in a VC-1 video elementary stream, as follows:

**TABLE 1**

| **Entry-point layer bitstream for Advanced Profile** | | |
|---|---|---|
| ENTRYPOINT LAYER() { | Number of bits | Descriptor |
| BROKEN_LINK | 1 | uimsbf |
| CLOSED_ENTRY | 1 | uimsbf |
| PANSCAN_FLAG | 1 | uimsbf |
| REFDIST_FLAG | 1 | uimsbf |
| LOOPFILTER | 1 | uimsbf |
| FASTUVMC | 1 | uimsbf |
| EXTENDED_MV | 1 | uimsbf |
| DQUANT | 2 | uimsbf |
| VSTRANSFORM | 1 | uimsbf |
| OVERLAP | 1 | uimsbf |
| QUANTIZER | 2 | uimsbf |
| if (HRD_PARAM_FGAG== 1) { | | |
| HRD_1ULLNESS ( ) | | |
| } | | |
| CODED_SIZE_FLAG | 1 | uimsbf |
| if (CODED_SIZE_FLAG == 1) { | | |
| CODED_WIDTH | 12 | uimsbf |
| CODED_HEIGHT | 12 | uimsbf |
| } | | |
| if (EXTENDED_MV== 1) { | | |
| EXTENDED_DMV | 1 | uimsbf |
| } | | |
| RANGE_MAPY_FLAG | 1 | uimsbf |
| if (RANGE_MAPY_FLAG == 1) { | | |
| RANGE_MAPY | 3 | uimsbf |
| } | | |
| RANGE_MAPUV_FLAG | 1 | uimsbf |
| if (RANGE_MAPUV_FLAG == 1) { | | |
| RANGE_MAPUV | 3 | uimsbf |
| } | | |
| } | | |

In various embodiments, the entry point indicators may be defined in accordance with a given standard, protocol or architecture. In some cases, the entry point indicators may be defined to extend a given standard, protocol or architecture. In the following Tables 1 and 2, various entry point indicators are defined as start code suffixes and their corresponding meanings suitable for bitstream segments embedded in a SMPTE 421M (VC-1) bitstream. The start codes should be uniquely identifiable, with different start codes for different video layers, such as a base layer and one or more enhancement layers. The start codes, however, may use similar structure identifiers between video layers to making parsing and identification easier. Examples of structure identifiers may include, but are not limited to, sequence headers, entry point headers, frame headers, field headers, slice headers, and so forth. Furthermore, start code emulation techniques may be utilized to reduce the possibility of start codes for a given video layer occurring randomly in the video stream.

Depending on a particular start code, a specific structure parser and decoder for each video layer may be invoked or launched to decode video information from the video stream. The specific structure parser and decoder may implement a specific set of decoder tools, such as reference frames needed, quantizers, rate control, motion compensation mode, and so forth appropriate for a given video layer. The embodiments are not limited in this context.

In various embodiments, the start code suffices may be backward compatible with the current VC-1 bitstream, so legacy VC-1 decoders should be able to continue working even if the VC-1 bitstream includes such new segments. The start code suffixes may be used to extend and build upon the current format of a SMPTE 421M video bitstream to support scalable video representation.

**TABLE 2**

| **Start code Suffix** | **Meaning** |
|---|---|
| 0x00 | SMPTE Reserved |
| 0x01-0x09 | SMPTE Reserved |
| 0x0A | End-of-Sequence |
| 0x0B | Slice |
| 0x0C | Field |
| 0x0D | Frame |
| 0x0E | Entry-point Header |
| 0x0F | Sequence Header |
| 0x10-0x1A | SMPTE Reserved |
| 0x1B | Slice Level User Data |
| 0x1C | Field Level User Data |
| 0x1D | Frame Level User Data |
| 0x1E | Entry-point Level User Data |
| 0x1F | Sequence Level User Data |
| 0x20-0x7F | SMPTE Reserved |
| 0x80-0xFF | Forbidden |

The start code suffixes shown in Table 2 may be appended at the end of an 0x000001 3-byte sequence to make various start codes. Such start codes are integrated in the VC-1 bitstream to allow video decoders to determine what portion of the bitstream they are parsing. For example, a sequence start code announces the occurrence of a sequence header in the VC-1 bitstream. Occurrences of bit sequences looking like start codes could be eliminated through start code emulation prevention that breaks such sequences into several pieces of bitstream that no longer emulate a start code.

In various embodiments, adding bitstream fragments representing additional video layers is achieved by adding new start codes to identify and signal the presence of the enhancement layers fragments in the bitstream. For example, with the 2 spatial layers and 3 temporal layers illustrated in **FIG. 4****,** one could assign the following suffixes to signal the various layer bitstream segments relative to the contents they carry, as shown in Table 3 as follows:

**TABLE 3**

| **Start Code Suffix** | **Meaning** |
|---|---|
| 0x00 | SMPTE Reserved |
| 0x01-0x09 | SMPTE Reserved |
| 0x0A | End-of-Sequence |
| 0x0B | Slice |
| 0x0C | Field |
| 0x0D | Frame |
| 0x0E | Entry-point Header |
| 0x0F | Sequence Header |
| 0x10-0x1A | SMPTE Reserved |
| 0x1B | Slice Level User Data |
| 0x1C | Field Level User Data |
| 0x1D | Frame Level User Data |
| 0x1E | Entry-point Level User Data |
| 0x1F | Sequence Level User Data |
| 0x20 | Slice Level- SL0 |
| 0x21 | Slice Level - TL1 |
| 0x22 | Slice Level- SL1 |
| 0x23 | Slice Level - TL2 |
| 0x24 | Slice Level - SL2 |
| 0x30 | Field Level - SL0 |
| 0x31 | Field Level - TL1 |
| 0x32 | Field Level - SL1 |
| 0x33 | Field Level - TL2 |
| 0x34 | Field Level - SL2 |
| 0x40 | Frame Level - SL0 |
| 0x41 | Frame Level - TL1 |
| 0x42 | Frame Level - SL1 |
| 0x43 | Frame Level - TL2 |
| 0x44 | Frame Level - SL2 |
| 0x50 | Entry Point Level - SL0 |
| 0x51 | Entry Point Level - TL1 |
| 0x52 | Entry Point Level - SL1 |
| 0x53 | Entry Point Level - TL2 |
| 0x54 | Entry Point Level - SL2 |
| 0x60 | Sequence Level - SL0 |
| 0x61 | Sequence Level - TL1 |
| 0x62 | Sequence Level - SL1 |
| 0x63 | Sequence Level - TL2 |
| 0x64 | Sequence Level - SL2 |
| 0x80-0xFF | Forbidden |

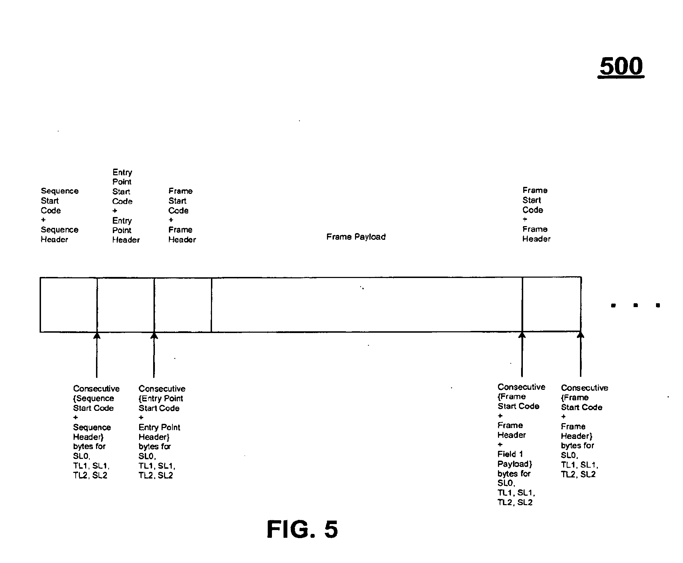

The insertion of the fragments should follow a set of defined scope rules. For example, sequence level SL0 information should follow sequence level BL information and so forth. This may be described in more detail with reference to FIGS. 5-8, where the original VC-1 bitstream is the BL layer of the video only, by way of example.

**FIG. 5** is a syntax diagram for a video stream 500. FIG. 5 illustrates video stream 500 which represents a VC-1 bitstream having only video frames, meaning that the content is progressive video and not interlaced video. This is typical of various real time communication scenarios where video sources produce progressive video only, such as webcams and so forth.

As shown in FIG. 5, video stream 500 may comprise a first block containing a sequence start code and sequence header for a sequence of video frames. The second block may contain an entry point start code and an entry point header. The third block may contain a frame start code and a frame header for a first video frame. The fourth block may contain the actual frame payload. The fifth block may contain the frame start code and frame header for a second video frame. This may continue for each frame within the sequence of frames for a given set of digital video content.

To implement multiple resolution coding using different video layers, one or more start codes from Table 2 and/or Table 3 may be inserted into the video stream 500 to indicate or delineate a BL video segment and enhancement layer (e.g., SL0, SL1, SL2, TL1, TL2, and so forth) video segments. The bottom arrows show the location where the additional sequence headers, entry point headers, frame headers and payloads relative to other video layers are inserted in the VC-1 BL bitstream.

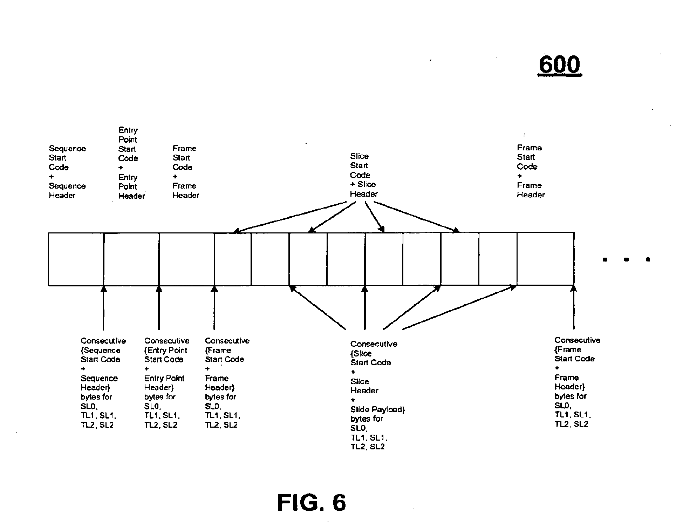

**FIG. 6** is a syntax diagram for a video stream 600. FIG. 6 illustrates video stream 600 which represents a VC-1 bitstream similar to video stream 500, except where every frame is encoded as a set of independent slices. Slice encoding is used for providing additional error resiliency in communication networks where packet loss is likely. With slide encoding, only a portion of the video frames gets affected by a packet loss as opposed to the whole frame. As shown in FIG. 6, various locations within video stream 600 for slice start codes and slice headers are indicated by the top arrows. The bottom arrows indicate locations where additional video layers may be inserted relative to the slice headers and slice payloads.

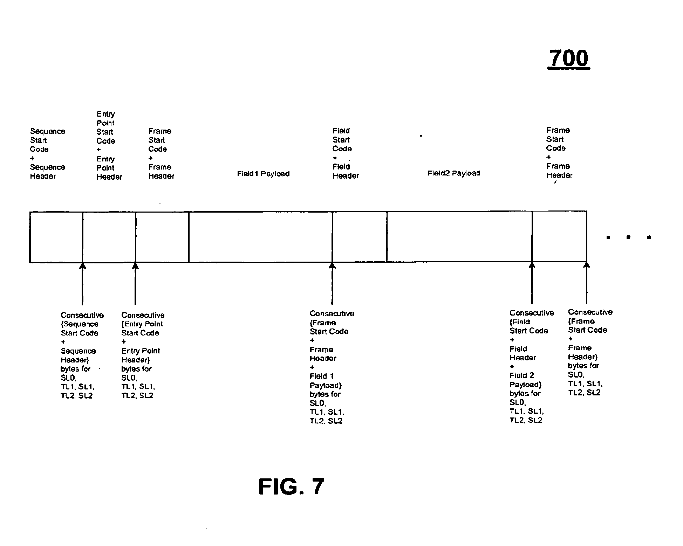

**FIG. 7** is a syntax diagram for a video stream 700. FIG. 7 illustrates video stream 700 which represents a VC-1 bitstream having interlaced video. In this case, a video frame is made of two video fields. The start codes, headers and video payloads of the scales relative to first field of the BL get inserted in the VC-1 bitstream before the start code and header of the second field of the BL. The start codes, headers and the video payloads of the scales relative to the second field of the BL get inserted in the VC-1 bitstream before the beginning of the next video frame.

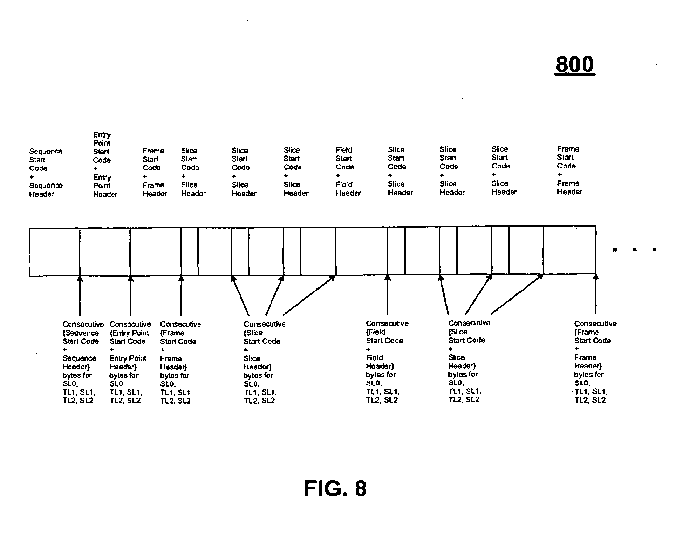

**FIG. 8** is a syntax diagram for a video stream 800. FIG. 8 illustrates video stream 800 which represents a VC-1 bitstream similar to video stream 700, except where every interlaced frame is encoded as a set of independent slices. The start codes, headers and video payloads of the slices pertaining to the additional video layers are shown by the arrows at the bottom of FIG. 8. The field header of the BL second field demarks the BL and any additional video layer data of the BL first field from the BL and any additional video layer data of the BL second field.

Operations for the above embodiments may be further described with reference to the following figures and accompanying examples. Some of the figures may include a logic flow. Although such figures presented herein may include a particular logic flow, it can be appreciated that the logic flow merely provides an example of how the general functionality as described herein can be implemented. Further, the given logic flow does not necessarily have to be executed in the order presented unless otherwise indicated. In addition, the given logic flow may be implemented by a hardware element, a software element executed by a processor, or any combination thereof. The embodiments are not limited in this context.

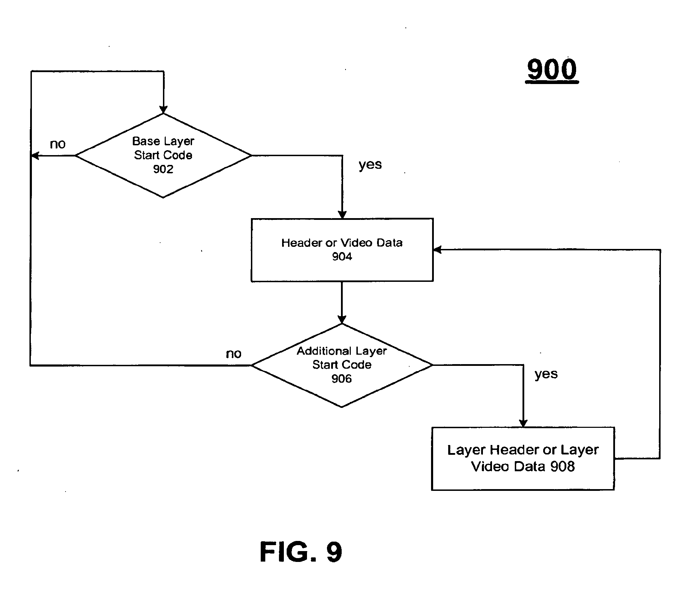

**FIG. 9** illustrates one embodiment of a logic decoder flow 900. Logic flow 900 may be representative of the operations executed by one or more embodiments described herein, such as the video capture and playback system 100, the video encoder 200 or the video decoder 300. As shown in FIG. 9, a parser for the video decoder 300 monitors a video stream for a BL start code at diamond 902. If the parser does not recognize a BL start code, it continues to loop through diamond 902 until one is recognized. Once the parser recognizes a BL start code, it acquires the header or header + payload associated with the start code at block 904. Once this is done, the parser checks for the presence of start codes for additional video layers at diamond 906. If the parser does not recognize any start codes for additional video layers within a given video stream or time period, control is passed to diamond 902. If the parser does recognize a start code for an additional video layer at diamond 906, it acquires the header or header + payload associated with the additional video layer at block 908, and control is passed back to diamond 906. The control loop between diamond 906 and block 908 continues for as many video layers as are being used in the given VC-1 bitstream. When a start code is recognized as no longer be one of an additional video scale at diamond 906, the parser goes back and begins looking for a start code pertaining to the VC-1 base layer at diamond 902.

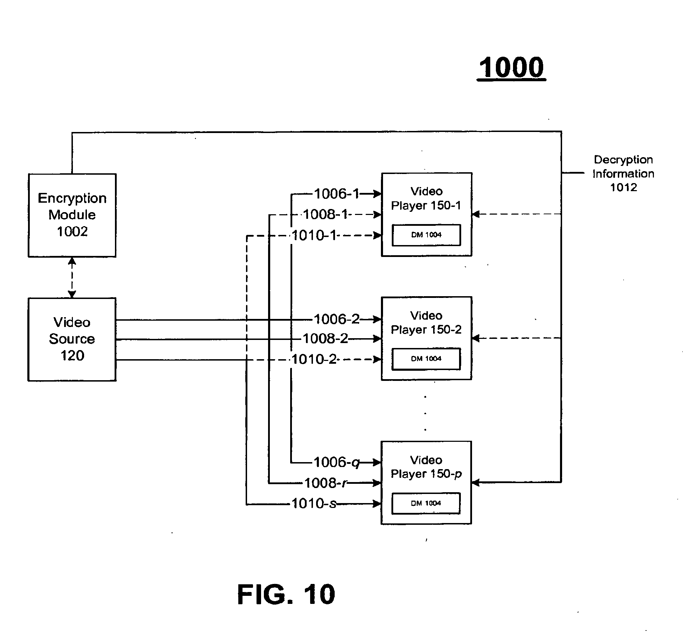

**FIG. 10** illustrates a block diagram of a first modified video capture and playback system 100, modified where the video source/encoder 120 includes an encryption module 1002, and multiple video players/decoders 150-1-*p* each include a decryption module 1004. The encryption module 1002 may be used to encrypt each video layer independently with a different encryption key. The encryption module 1002 may provide the encryption information 1012 (e.g., decryption keys and ciphers) for each video layer. The delivery of this information is either done in-band or by other external communication channels. Furthermore, the encryption information 1012 may be dynamic and vary over time to enhance security. As shown in FIG. 10, arrows 1006-1-*q* may represent the base layer, arrows 1008-1-*r* may represent the spatial enhancement layer, and arrows 1010-1-*s* may represent the temporal enhancement layer. Based on the decryption information 1012 received from the encryption module 1002, the decryption module 1004 for each receiver is able (or is not able) to decrypt each video layer. Availability of the decryption keys is usually tied to security policies or to rights granted by a subscription/purchase service. For example, the video player/decoder 150-2 is only capable of receiving and decrypting the base layer and the spatial enhancement layer of the video stream, while the video player/decoder 150-1 can decode the base layer only. Any attempt by a video player/decoder 150-1-*p* to receive and decrypt a video layer that it is not authorized as represented by the dashed arrows will fail. In this manner, the video source/encoder 120 may send a lower resolution video stream and a higher resolution video stream attached to different service payments or access rights. For example, availability of a higher resolution video stream (e.g., for a video conference call) may be tied to the payment of a service premium.

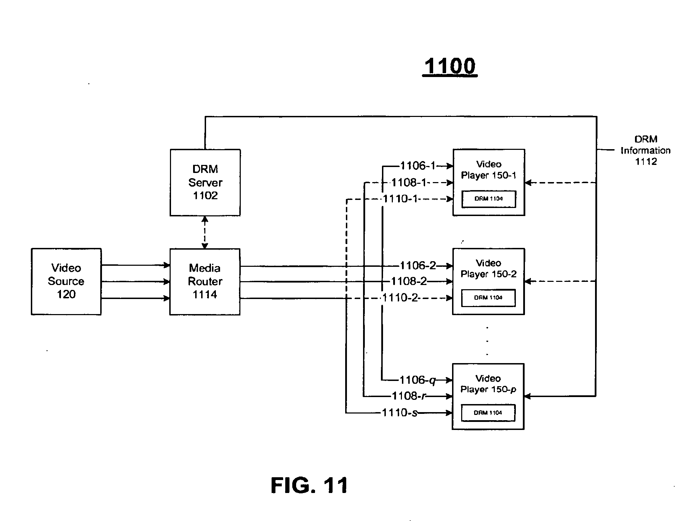

**FIG. 11** illustrates a block diagram of a second modified video capture and playback system 100, modified where the video source/encoder 120 includes a digital rights management (DRM) server 1102, and multiple video players/decoders 150-1-*p* each include a DRM module 1104. The DRM server 1102 may be used to assign each video layer a different set of digital rights. For implementations that include a multimedia conferencing router 1114, each video layer can be associated with a particular set of DRM guidelines or policies. Under the control of the DRM server 1102, the multimedia conferencing router 1114 forwards video layers according to the rights that have been granted to each video player/decoder 150-1-p. The DRM server 1102 may provide the DRM information 1112 for each video layer to video players/decoders 150-1-*p*. As shown in FIG. 11, arrows 1106-1-*q* may represent the base layer, arrows 1108-1-*r* may represent the spatial enhancement layer, and arrows 1110-1-*s* may represent the temporal enhancement layer. Based on the DRM information 1112 received from the DRM server 1102, the DRM module 1104 for each receiver is authorized (or is not authorized) to receive or access each video layer. Availability of the DRM information 1112 is usually tied to DRM policies. For example, the video player/decoder 150-2 is only capable of receiving and accessing the base layer and the spatial enhancement layer of the video stream, while the video player/decoder 150-1 can receive and access the base layer only. Any attempt by a video player/decoder 150-1-*p* to receive and access a video layer that it is not authorized as represented by the dashed arrows will fail. The media router 1114 sends the video streams according to the DRM policies set for each video players/decoders 15 0-1-*p*. The multiple coding resolutions provided by the video source/encoder 120 allows the control and management of diversity in the access rights that participants might have in a real time conference.

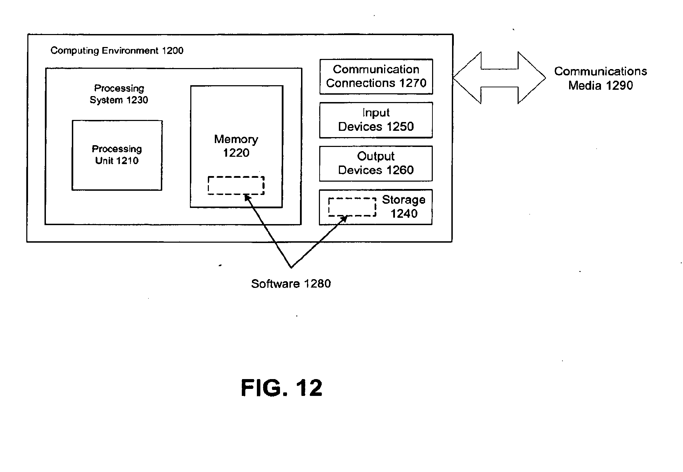

**FIG. 12** illustrates a block diagram for a computing environment 1200. Computing environment 1200 may represent a general system architecture suitable for implementing various embodiments. Computing environment 1200 may include multiple elements. An element may comprise any physical or logical structure arranged to perform certain operations. Each element may be implemented as hardware, software, or any combination thereof, as desired for a given set of design parameters or performance constraints. Examples of hardware elements may include devices, components, processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software may include any software components, programs, applications, computer programs, application programs, system programs, machine programs, operating system software, middleware, firmware, software modules, routines, subroutines, functions, methods, interfaces, software interfaces, application program interfaces (API), instruction sets, computing code, computer code, code segments, computer code segments, words, values, symbols, software objects, or any combination thereof. Although computing device 1200 as shown in FIG. 1 has a limited number of elements in a certain topology, it may be appreciated that computing environment 1200 may include more or less elements in alternate topologies as desired for a given implementation. The embodiments are not limited in this context.

In various embodiments, computing environment 1200 may be implemented as part of a target device suitable for processing media information. Examples of target devices may include, but are not limited to, a computer, a computer system, a computer sub-system, a workstation, a terminal, a server, a web server, a virtual server, a personal computer (PC), a desktop computer, a laptop computer, an ultra-laptop computer, a portable computer, a handheld computer, a personal digital assistant (PDA), a mobile computing device, a cellular telephone, a media device (e.g., audio device, video device, text device, and so forth), a media player, a media processing device, a media server, a home entertainment system, consumer electronics, a Digital Versatile Disk (DVD) device, a video home system (VHS) device, a digital VHS device, a personal video recorder, a gaming console, a Compact Disc (CD) player, a digital camera, a digital camcorder, a video surveillance system, a video conferencing system, a video telephone system, and any other electronic, electromechanical, or electrical device. The embodiments are not limited in this context.

When implemented as a media processing device, computing environment 1200 also may be arranged to operate in accordance with various standards and/or protocols for media processing. Examples of media processing standards include, without limitation, the SMPTE standard 421M (VC-1), VC-1 implemented for Real Time Communications, VC-1 implemented as WMV-9 and variants, Digital Video Broadcasting Terrestrial (DVB-T) broadcasting standard, the ITU/IEC H.263 standard, Video Coding for Low Bit rate Communication, ITU-T Recommendation H.263v3, published November 2000 and/or the ITU/IEC H.264 standard, Video Coding for Very Low Bit rate Communication, ITU-T Recommendation H.264, published May 2003, Motion Picture Experts Group (MPEG) standards (e.g., MPEG-1, MPEG-2, MPEG-4), and/or High performance radio Local Area Network (HiperLAN) standards. Examples of media processing protocols include, without limitation, Session Description Protocol (SDP), Real Time Streaming Protocol (RTSP), Real-time Transport Protocol (RTP), Synchronized Multimedia Integration Language (SMIL) protocol, MPEG-2 Transport and MPEG-2 Program streams, and/or Internet Streaming Media Alliance (ISMA) protocol. One implementation of the multiple resolution video encoding and decoding techniques as described herein may be incorporated in the Advanced Profile of the WINDOWS® MEDIA VIDEO version 9 (WMV-9) video codec distributed and licensed by Microsoft® Corporation of Redmond, Wash., USA, including subsequent revisions and variants, for example. The embodiments are not limited in this context.

With reference to FIG. 12, the computing environment 1200 includes at least one processing unit 1210 and memory 1220. In FIG. 12, this most basic configuration 1230 is included within a dashed line. The processing unit 1210 may be any type of processor capable of executing software, such as a general-purpose processor, a dedicated processor, a media processor, a controller, a microcontroller, an embedded processor, a digital signal processor (DSP), and so forth. The processing unit 1210 executes computer-executable instructions and may be a real or a virtual processor. In a multi-processing system, multiple processing units execute computer-executable instructions to increase processing power. The memory 1220 may be implemented using any machine-readable or computer-readable media capable of storing data, including both volatile and non-volatile memory. For example, the memory 1220 may include read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, or any other type of media suitable for storing information. In various embodiments, the memory 1220 stores software 1280 implementing scalable video encoding and/or decoding techniques.

A computing environment may have additional features. For example, the computing environment 1200 includes storage 1240, one or more input devices 1250, one or more output devices 1260, and one or more communication connections 1270. An interconnection mechanism such as a bus, controller, or network interconnects the components of the computing environment 1200. Typically, operating system software provides an operating environment for other software executing in the computing environment 1200, and coordinates activities of the components of the computing environment 1200.

The storage 1240 may be removable or non-removable, and includes magnetic disks, magnetic tapes or cassettes, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), or any other medium which can be used to store information and which can be accessed within the computing environment 1200. The storage 1240 stores instructions for the software 1280 implementing the multi-spatial resolution coding and/or decoding techniques.

The input device(s) 1250 may be a touch input device such as a keyboard, mouse, pen, or trackball, a voice input device, a scanning device, network adapter, or another device that provides input to the computing environment 1200. For video, the input device(s) 1250 may be a TV tuner card, webcam or camera video interface, or similar device that accepts video input in analog or digital form, or a CD-ROM/DVD reader that provides video input to the computing environment. The output device(s) 1260 may be a display, projector, printer, speaker, CD/DVD-writer, network adapter, or another device that provides output from the computing environment 1200.

In various embodiments, computing environment 1200 may further include one or more communications connections 1270 that allow computing environment 1200 to communicate with other devices via communications media 1290. Communications connections 1270 may include various types of standard communication elements, such as one or more communications interfaces, network interfaces, network interface cards (NIC), radios, wireless transmitters/receivers (transceivers), wired and/or wireless communication media, physical connectors, and so forth. Communications media 1290 typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media 1290 includes wired communications media and wireless communications media. Examples of wired communications media may include a wire, cable, metal leads, printed circuit boards (PCB), backplanes, switch fabrics, semiconductor material, twisted-pair wire, co-axial cable, fiber optics, a propagated signal, and so forth. Examples of wireless communications media may include acoustic, radio-frequency (RF) spectrum, infrared and other wireless media. The terms machine-readable media and computer-readable media as used herein are meant to include, by way of example and not limitation, memory 1220, storage 1240, communications media 1290, and combinations of any of the above.

Some embodiments can be described in the general context of computer-executable instructions, such as those included in program modules, being executed in a computing environment on a target real or virtual processor. Generally, program modules include routines, programs, libraries, objects, classes, components, data structures, and so forth that perform particular tasks or implement particular abstract data types. The functionality of the program modules may be combined or split between program modules as desired in various embodiments. Computer-executable instructions for program modules may be executed within a local or distributed computing environment.

Numerous specific details have been set forth herein to provide a thorough understanding of the embodiments. It will be understood by those skilled in the art, however, that the embodiments may be practiced without these specific details. In other instances, well-known operations, components and circuits have not been described in detail so as not to obscure the embodiments. It can be appreciated that the specific structural and functional details disclosed herein may be representative and do not necessarily limit the scope of the embodiments.

It is also worthy to note that any reference to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, computing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, CD-ROM, CD-R, CD-RW, optical disk, magnetic media, magneto-optical media, removable memory cards or disks, various types of DVD, a tape, a cassette, or the like.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**The following is a list of further preferred embodiments of the invention:**
Embodiment 1: A method, comprising:
   receiving video information; and
   encoding said video information into a video stream with different video layers including a base layer and an enhancement layer, said base layer having a first level of spatial resolution and a first level of temporal resolution, and said enhancement layer increasing said first level of spatial resolution or said first level of temporal resolution.
Embodiment 2: The method of embodiment 1, comprising encoding video information into said video stream as a first temporal enhancement layer at a second level of temporal resolution.
Embodiment 3: The method of embodiment 1 or 2, comprising encoding video information into said video stream as a first spatial enhancement layer at a second level of spatial resolution.
Embodiment 4: The method any one of embodiments 1 to 3, comprising inserting a uniquely identifiable start code to indicate a start point in said video stream for said enhancement layer.
Embodiment 5: The method any one of embodiments 1 to 4, comprising multiplexing various structure identifiers and payloads for said enhancement layer with various structure identifiers and payloads for said base layer.
Embodiment 6: The method any one of embodiments 1 to 5, comprising encrypting each video layer with a different encryption key.
Embodiment 7: The method any one of embodiments 1 to 6, comprising assigning each video layer a different set of digital rights.
Embodiment 8: A method, comprising:
   receiving an encoded video stream; and
   decoding video information from different video layers including a base layer and an enhancement layer of said encoded video stream, said base layer having a first level of spatial resolution and a first level of temporal resolution, and said enhancement layer increasing said first level of spatial resolution or said first level of temporal resolution.
Embodiment 9: The method of embodiment 8, comprising decoding video information from a first temporal enhancement layer at a second level of temporal resolution.
Embodiment 10: The method of embodiment 8 or 9, comprising decoding video information from a first spatial enhancement layer at a second level of spatial resolution.
Embodiment 11: The method of any one of embodiments 8 to 10, comprising:
   parsing said video stream; and
   retrieving a start code to indicate a start point in said video stream for said enhancement layer.
Embodiment 12: The method of any one of embodiments 8 to 11, comprising invoking a specific structure parser and decoder for said enhancement layer based on a value for an enhancement layer start code.
Embodiment 13: The method of any one of embodiments 8 to 12, comprising recognizing a start code associated with said enhancement layer to invoke a set of decoding tools for said enhancement layer
Embodiment 14: The method of any one of embodiments 8 to 13, comprising decrypting each video layer with a different encryption key.
Embodiment 15: The method of any one of embodiments 8 to 14, comprising:
   retrieving a different set of digital rights for each video layer; and
   controlling access to video information from each video layer in accordance with each set of digital rights.
Embodiment 16: The method of any one of embodiments 8 to 15, comprising reproducing video information from said base layer and video information from said enhancement layer to increase said first level of spatial resolution or said first level of temporal resolution on a display.
Embodiment 17: An apparatus, comprising a video encoder (200) to encode video information into a video stream with a base layer and an enhancement layer, said base layer having a first level of spatial resolution and a first level of temporal resolution, and said enhancement layer increasing said first level of spatial resolution or said first level of temporal resolution.
Embodiment 18: The apparatus of embodiment 17, said video encoder to encode video information into said video stream as a temporal enhancement layer at a second level of temporal resolution or a third level of temporal resolution.
Embodiment 19: The apparatus of embodiment 17 or 18, said video encoder to encode video information into said video stream as a spatial enhancement layer at a second level of spatial resolution and said first level of temporal resolution, a second level of temporal resolution, or a third level of temporal resolution.
Embodiment 20: The apparatus of any one of embodiments 17 to 19, comprising an encryption module (1002) coupled to said video encoder, said encryption module to encrypt each layer with a different encryption key.
Embodiment 21: The apparatus of any one of embodiments 17 to 20, comprising a digital rights management module (1102) coupled to said video encoder, said digital rights management module to assign each layer a different set of digital rights.
Embodiment 22: An apparatus comprising a video decoder (300) to decode video information from a base layer and an enhancement layer of an encoded video stream, said base layer having a first level of spatial resolution and a first level of temporal resolution, and said enhancement layer increasing said first level of spatial resolution or said first level of temporal resolution.
Embodiment 23: The apparatus of embodiment 22, said video decoder to decode video information from a temporal enhancement layer at a second level of temporal resolution or a third level of temporal resolution.
Embodiment 24: The apparatus of embodiment 22 or 23, said video decoder to decode video information from a spatial enhancement layer at a second level of spatial resolution and said first level of temporal resolution, a second level of temporal resolution, or a third level of temporal resolution.
Embodiment 25: The apparatus of any one of embodiments 22 to 24, comprising a decryption module (1004) coupled to said video decoder, said decryption module to decrypt each layer with a different decryption key.
Embodiment 26: The apparatus of any one of embodiments 22 to 25, comprising a digital rights management module (1104) coupled to said video decoder, said digital rights management module to control access to video information from each layer using a different set of digital rights assigned to each layer.
Embodiment 27: The apparatus of any one of embodiments 22 to 26, comprising a display device (1260) coupled to said video decoder, said display device to display video information from said base layer and video information from said enhancement layer to increase said first level of spatial resolution or said first level of temporal resolution on a display.
Embodiment 28: A computer program, comprising computer program elements when executed on a data processing apparatus to implement the method of any one of embodiments 1 to 16, and/or to implement the video encoder of any one of embodiments 17 to 21, and/or to implement the video decoder of any one of embodiments 22 to 27.
Embodiment 29: A computer program carrier medium, carrying a computer program according to embodiment 28.

## Claims

1. A method, comprising:
receiving video information;
encoding said video information into a video stream with different video layers including a base layer and an enhancement layer, said base layer having a first level of spatial resolution and a first level of temporal resolution, and said enhancement layer increasing said first level of spatial resolution or said first level of temporal resolution;
inserting a uniquely identifiable start code to indicate a start point in said video stream for said enhancement layer; and
specifying a coding resolution of the video stream in a sequence header within the video stream, wherein various levels of coding resolutions are organized in the form of multiple video layers, with each video layer providing a different level of spatial resolution and/or temporal resolution for the video information.

2. The method of claim 1, comprising encoding video information into said video stream as a first temporal enhancement layer at a second level of temporal resolution, and/or as a first spatial enhancement layer at a second level of spatial resolution.

3. The method of any one of claims 1 to 2, comprising multiplexing various structure identifiers and payloads for said enhancement layer with various structure identifiers and payloads for said base layer.

4. The method of any one of claims 1 to 3, comprising encrypting each video layer with a different encryption key.

5. The method of any one of claims 1 to 4, comprising assigning each video layer a different set of digital rights.

6. A method, comprising:
receiving an encoded video stream;
decoding video information from different video layers including a base layer and an enhancement layer of said encoded video stream, said base layer having a first level of spatial resolution and a first level of temporal resolution, and said enhancement layer increasing said first level of spatial resolution or said first level of temporal resolution;
recognizing a uniquely identifiable start code associated with said enhancement layer to invoke a set of decoding tools for said enhancement layer, wherein the uniquely identifiable start code indicates a start point in said video stream for said enhancement layer; and
decoding a coding resolution information of the video stream from a sequence header within the video stream, wherein various levels of coding resolutions are organized in the form of multiple video layers, with each video layer providing a different level of spatial resolution and/or temporal resolution for the video information.

7. The method of claim 6, comprising decoding video information from a first temporal enhancement layer at a second level of temporal resolution and/or from a first spatial enhancement layer at a second level of spatial resolution.

8. The method of claim 6 or 7, comprising the following:
invoking a specific structure parser and decoder for said enhancement layer based on a value for the enhancement layer start code.

9. The method of any one of claims 6 to 8, comprising one or more of the following:
decrypting each video layer with a different encryption key;
retrieving a different set of digital rights for each video layer and controlling access to video information from each video layer in accordance with each set of digital rights; and
reproducing video information from said base layer and video information from said enhancement layer to increase said first level of spatial resolution or said first level of temporal resolution on a display.

10. An apparatus, comprising a video encoder (200) to encode video information into a video stream with a base layer and an enhancement layer, said base layer having a first level of spatial resolution and a first level of temporal resolution, and said enhancement layer increasing said first level of spatial resolution or said first level of temporal resolution, wherein said enhancement layer is operative to insert a uniquely identifiable start code to indicate a start point in said video stream for said enhancement layer, wherein the video encoder is further adapted to specify a coding resolution of the video stream in a sequence header within the video stream, wherein various levels of coding resolutions are organized in the form of multiple video layers, with each video layer providing a different level of spatial resolution and/or temporal resolution for the video information.

11. The apparatus of claim 10, said video encoder to encode video information into said video stream as a temporal enhancement layer at a second level of temporal resolution or a third level of temporal resolution, and/or to encode video information into said video stream as a spatial enhancement layer at a second level of spatial resolution and said first level of temporal resolution, a second level of temporal resolution, or a third level of temporal resolution.

12. An apparatus comprising a video decoder (300) to decode video information from a base layer and an enhancement layer of an encoded video stream, said base layer having a first level of spatial resolution and a first level of temporal resolution, and said enhancement layer increasing said first level of spatial resolution or said first level of temporal resolution, wherein said enhancement layer is operative to recognize a uniquely identifiable start code associated with said enhancement layer to invoke a set of decoding tools for said enhancement layer, wherein the uniquely identifiable start code indicates a start point in said video stream for said enhancement layer, wherein the decoder is further adapted to decode a coding resolution information of the video stream from a sequence header within the video stream, wherein various levels of coding resolutions are organized in the form of multiple video layers, with each video layer providing a different level of spatial resolution and/or temporal resolution for the video information.

13. The apparatus of claim 12, said video decoder to decode video information from a temporal enhancement layer at a second level of temporal resolution or a third level of temporal resolution and/or to decode video information from a spatial enhancement layer at a second level of spatial resolution and said first level of temporal resolution, a second level of temporal resolution, or a third level of temporal resolution.

14. The apparatus of claim 12 or 13, comprising a decryption module (1004) coupled to said video decoder, said decryption module to decrypt each layer with a different decryption key.

## Patentansprüche

1. Verfahren, umfassend:
Empfangen von Videoinformationen;
Kodieren dieser Videoinformationen zu einem Videodatenstrom mit verschiedenen Videoschichten, die eine Basisschicht und eine Verbesserungsschicht beinhalten, wobei die Basisschicht eine erste Ebene der räumlichen Auflösung und eine erste Ebene der zeitlichen Auflösung aufweist, und die Verbesserungsschicht die erste Ebene der räumlichen Auflösung oder die erste Ebene der zeitlichen Auflösung anhebt;
Einfügen eines eindeutig identifizierbaren Startcodes zum Anzeigen eines Startpunkts in dem Videodatenstrom für die Verbesserungsschicht; und
Spezifizieren einer Kodierungsauflösung des Videodatenstroms in einem Sequenz-Header in dem Videodatenstrom, wobei verschiedene Ebenen von Kodierungsauflösungen in Form von mehreren Videoschichten organisiert sind, und wobei jede Videoschicht eine andere Ebene der räumlichen Auflösung und/oder der zeitlichen Auflösung für die Videoinformationen bereitstellt.

2. Verfahren nach Anspruch 1, umfassend das Kodieren von Videoinformationen in dem Videodatenstrom als eine erste zeitliche Verbesserungsschicht auf einer zweiten Ebene der zeitlichen Auflösung, und/oder als eine erste räumliche Verbesserungsschicht auf einer zweiten Ebene der räumlichen Auflösung.

3. Verfahren nach einem der Ansprüche 1 bis 2, umfassend das Multiplexen von verschiedenen Strukturidentifikatoren und Nutzlasten für die Verbesserungsschicht mit verschiedenen Strukturidentifikatoren und Nutzlasten für die Basisschicht.

4. Verfahren nach einem der Ansprüche 1 bis 3, umfassend das Verschlüsseln jeder Videoschicht mit einem anderen Verschlüsselungscode.

5. Verfahren nach einem der Ansprüche 1 bis 4, umfassend das Zuweisen eines anderen Satzes von digitalen Rechten zu jeder Videoschicht.

6. Verfahren, umfassend:
Empfangen eines kodierten Videodatenstroms;
Dekodieren von Videoinformationen von verschiedenen Videoschichten, einschließlich einer Basisschicht und einer Verbesserungsschicht des kodierten Videodatenstroms, wobei die Basisschicht eine erste Ebene der räumlichen Auflösung und eine erste Ebene der zeitlichen Auflösung aufweist, und die Verbesserungsschicht die erste Ebene der räumlichen Auflösung oder die erste Ebene der zeitlichen Auflösung anhebt;
Erkennen eines eindeutig identifizierbaren Startcodes, welcher der Verbesserungsschicht zugeordnet ist, um einen Satz von Dekodierwerkzeugen für die Verbesserungsschicht aufzurufen, wobei der eindeutig identifizierbare Startcode einen Startpunkt in dem Videodatenstrom für die Verbesserungsschicht anzeigt; und
Dekodieren einer Kodierungsauflösungsinformation des Videodatenstroms aus einem Sequenz-Header in dem Videodatenstrom, wobei verschiedene Ebenen von Kodierungsauflösungen in Form von mehreren Videoschichten organisiert sind, und wobei jede Videoschicht eine andere Ebene der räumlichen Auflösung und/oder der zeitlichen Auflösung für die Videoinformationen bereitstellt.

7. Verfahren nach Anspruch 6, umfassend das Dekodieren von Videoinformationen aus einer ersten zeitlichen Verbesserungsschicht auf einer zweiten Ebene der zeitlichen Auflösung, und/oder aus einer ersten räumlichen Verbesserungsschicht auf einer zweiten Ebene der räumlichen Auflösung.

8. Verfahren nach Anspruch 6 oder 7, umfassend Folgendes:
Aufrufen eines spezifischen Struktur-Parsers und Dekodierers für die Verbesserungsschicht basierend auf einem Wert für den Verbesserungsschicht-Startcode.

9. Verfahren nach einem der Ansprüche 6 bis 8, umfassend eines oder mehrere aus Folgendem:
Entschlüsseln jeder Videoschicht mit einem anderen Verschlüsselungscode;
Abrufen eines anderen Satzes von digitalen Rechten für jede Videoschicht und Steuern des Zugriffs auf Videoinformationen von jeder Videoschicht entsprechend jedem Satz von digitalen Rechten; und
Wiedergeben von Videoinformationen aus der Basisschicht und Videoinformationen aus der Verbesserungsschicht auf einer Anzeige, um die erste Ebene der räumlichen Auflösung oder die erste Ebene der zeitlichen Auflösung anzuheben.

10. Vorrichtung, umfassend einen Videokodierer (200) zum Kodieren von Videoinformationen zu einem Videodatenstrom mit einer Basisschicht und einer Verbesserungsschicht, wobei die Basisschicht eine erste Ebene der räumlichen Auflösung und eine erste Ebene der zeitlichen Auflösung aufweist, und die Verbesserungsschicht die erste Ebene der räumlichen Auflösung oder die erste Ebene der zeitlichen Auflösung anhebt,
wobei die Verbesserungsschicht dazu betätigt werden kann, einen eindeutig identifizierbaren Startcode zum Anzeigen eines Startpunkts in den Videodatenstrom für die Verbesserungsschicht einzufügen, wobei der Videokodierer des Weiteren dazu eingerichtet ist, eine Kodierungsauflösung des Videodatenstroms in einem Sequenz-Header in dem Videodatenstrom zu spezifizieren, wobei verschiedene Ebenen von Kodierungsauflösungen in Form von mehreren Videoschichten organisiert sind, und wobei jede Videoschicht eine andere Ebene der räumlichen Auflösung und/oder der zeitlichen Auflösung für die Videoinformationen bereitstellt.

11. Vorrichtung nach Anspruch 10, wobei der Videokodierer die Videoinformationen als eine zeitliche Verbesserungsschicht auf einer zweiten Ebene der zeitlichen Auflösung oder einer dritten Ebene der zeitlichen Auflösung in den Videodatenstrom kodiert, und/oder Videoinformationen als eine räumliche Verbesserungsschicht auf einer zweiten Ebene der räumlichen Auflösung und einer ersten Ebene der zeitlichen Auflösung, einer zweiten Ebene der zeitlichen Auflösung, oder einer dritten Ebene der zeitlichen Auflösung in den Videodatenstrom kodiert.

12. Vorrichtung, umfassend einen Video-Decoder (300) zum Dekodieren von Videoinformationen aus einer Basisschicht und einer Verbesserungsschicht eines kodierten Videodatenstroms, wobei die Basisschicht eine erste Ebene von räumlicher Auflösung und eine erste Ebene von zeitlicher Auflösung aufweist, und die Verbesserungsschicht die erste Ebene der räumlichen Auflösung oder die erste Ebene der zeitlichen Auflösung anhebt, wobei die Verbesserungsschicht dazu betätigt werden kann, einen eindeutig identifizierbaren Startcode, der der Verbesserungsschicht zugeordnet ist, zu erkennen und einen Satz von Dekodierwerkzeugen für die Verbesserungsschicht aufzurufen, wobei der eindeutig identifizierbare Startcode einen Startpunkt in dem Videodatenstrom für die Verbesserungsschicht anzeigt, wobei der Decoder des Weiteren dazu eingerichtet ist, Kodierungsauflösungsinformationen des Videodatenstroms aus einem Sequenz-Header in dem Videodatenstrom zu dekodieren, wobei verschiedene Ebenen von Kodierungsauflösungen in Form von mehreren Videoschichten organisiert sind, und wobei jede Videoschicht eine andere Ebene der räumlichen Auflösung und/oder der zeitlichen Auflösung für die Videoinformationen bereitstellt.

13. Vorrichtung nach Anspruch 12, wobei der Video-Decoder die Videoinformationen aus einer zeitlichen Verbesserungsschicht auf einer zweiten Ebene der zeitlichen Auflösung oder einer dritten Ebene der zeitlichen Auflösung dekodiert und/oder Videoinformationen aus einer räumlichen Verbesserungsschicht auf einer zweiten Ebene der räumlichen Auflösung und der ersten Ebene der zeitlichen Auflösung, einer zweiten Ebene der zeitlichen Auflösung, oder einer dritten Ebene der zeitlichen Auflösung dekodiert.

14. Vorrichtung nach Anspruch 12 oder 13, umfassend ein Entschlüsselungsmodul (1004), das mit dem Video-Decoder verbunden ist, wobei das Entschlüsselungsmodul jede Schicht mit einem anderen Entschlüsselungscode entschlüsselt.

## Revendications

1. Procédé comprenant :
la réception d'informations vidéo ;
le codage desdites informations vidéo en un flux vidéo avec des couches vidéo différentes incluant une couche de base et une couche d'amélioration, ladite couche de base ayant un premier niveau de résolution spatiale et un premier niveau de résolution temporelle et ladite couche d'amélioration augmentant ledit premier niveau de résolution spatiale ou ledit premier niveau de résolution temporelle ;
l'insertion d'un code de démarrage identifiable de manière unique pour indiquer le point de départ dans ledit flux vidéo pour ladite couche d'amélioration ; et
la spécification d'une résolution de codage du flux vidéo dans un en-tête de séquence dans le flux vidéo, dans lequel divers niveaux de résolution de codage sont organisés sous la forme de couches vidéo multiples, chaque couche vidéo fournissant un niveau différent de résolution spatiale et/ou de résolution temporelle pour les informations vidéo.

2. Procédé selon la revendication 1, comprenant le codage d'informations vidéo dans ledit flux vidéo en tant que première couche d'amélioration temporelle à un deuxième niveau de résolution temporelle et/ou en tant que première couche d'amélioration spatiale à un deuxième niveau de résolution spatiale.

3. Procédé selon l'une quelconque des revendications 1 à 2, comprenant le multiplexage de divers identifiants de structures et charges utiles pour ladite couche d'amélioration avec divers identifiants de structures et charges utiles pour ladite couche de base.

4. Procédé selon l'une quelconque des revendications 1 à 3, comprenant le chiffrement de chaque couche vidéo avec une clé de chiffrement différente.

5. Procédé selon l'une quelconque des revendications 1 à 4, comprenant l'assignation à chaque couche vidéo d'un jeu différent de droits numériques.

6. Procédé comprenant :
la réception d'un flux vidéo codé ;
le décodage d'informations vidéo à partir de couches vidéo différentes incluant une couche de base et une couche d'amélioration dudit flux vidéo codé, ladite couche de base ayant un premier niveau de résolution spatiale et un premier niveau de résolution temporelle et ladite couche d'amélioration augmentant ledit premier niveau de résolution spatiale ou ledit premier niveau de résolution temporelle ;
la reconnaissance d'un code de départ identifiable de manière unique associé avec ladite couche d'amélioration pour appeler un jeu d'outils de décodage pour ladite couche d'amélioration, dans lequel le code de départ identifiable de manière unique indique un point de départ dans ledit flux vidéo pour ladite couche d'amélioration ; et
le décodage d'informations de résolution de codage du flux vidéo à partir d'un en-tête de séquence dans le flux vidéo, dans lequel divers niveaux de résolution de codage sont organisés sous la forme de couches vidéo multiples, chaque couche vidéo fournissant un niveau différent de résolution spatiale et/ou de résolution temporelle pour les informations vidéo.

7. Procédé selon la revendication 6, comprenant le décodage d'informations vidéo à partir d'une première couche d'amélioration temporelle à un deuxième niveau de résolution temporelle et/ou à partir d'une première couche d'amélioration spatiale à un deuxième niveau de résolution spatiale.

8. Procédé selon la revendication 6 ou 7, comprenant :
l'appel d'un analyseur de structure spécifique et d'un décodeur pour ladite couche d'amélioration en se basant sur la valeur dudit code de démarrage de la couche d'amélioration.

9. Procédé selon l'une quelconque des revendications 6 à 8, comprenant un ou plusieurs parmi :
le déchiffrement de chaque couche vidéo avec une clé de chiffrement différente ;
la récupération d'un jeu différent de droits numériques pour chaque couche vidéo et le contrôle d'accès aux informations vidéo provenant de chaque couche vidéo en fonction de chaque jeu de droits numériques ; et
la reproduction sur un dispositif d'affichage d'informations vidéo à partir de ladite couche de base et d'informations vidéo à partir de ladite couche d'amélioration pour augmenter ledit premier niveau de résolution spatiale ou ledit premier niveau de résolution temporelle.

10. Dispositif comprenant un codeur vidéo (200) pour coder des informations vidéo en un flux vidéo avec une couche de base et une couche d'amélioration, ladite couche de base ayant un premier niveau de résolution spatiale et un premier niveau de résolution temporelle, et ladite couche d'amélioration augmentant ledit premier niveau de résolution spatiale ou ledit premier niveau de résolution temporelle, dans lequel ladite couche d'amélioration agit en insérant un code de départ identifiable de manière unique pour indiquer le point de départ dans ledit flux vidéo pour ladite couche d'amélioration, dans lequel le codeur vidéo est adapté en outre à spécifier une résolution de codage du flux vidéo dans un en-tête de séquence dans le flux vidéo, dans lequel divers niveaux de résolution de codage sont organisés sous la forme de couches vidéo multiples, chaque couche vidéo fournissant un niveau différent de résolution spatiale et/ou de résolution temporelle pour les informations vidéo.

11. Dispositif selon la revendication 10, ledit codeur vidéo étant destiné à coder des informations vidéo dans ledit flux vidéo en tant que couche d'amélioration temporelle à un deuxième niveau de résolution temporelle ou à un troisième niveau de résolution temporelle, et/ou à coder des informations vidéo dans ledit flux vidéo en tant que couche d'amélioration spatiale à un deuxième niveau de résolution spatiale et audit premier niveau de résolution temporelle, un deuxième niveau de résolution temporelle ou un troisième niveau de résolution temporelle.

12. Dispositif comprenant un décodeur vidéo (300) pour décoder des informations vidéo à partir d'une couche de base et d'une couche d'amélioration d'un flux vidéo codé, ladite couche de base ayant un premier niveau de résolution spatiale et un premier niveau de résolution temporelle et ladite couche d'amélioration augmentant ledit premier niveau de résolution spatiale ou ledit premier niveau de résolution temporelle, dans lequel ladite couche d'amélioration agit en reconnaissant un code de départ identifiable de manière unique associé avec ladite couche d'amélioration pour appeler un jeu d'outils de décodage pour ladite couche d'amélioration, dans lequel le code de départ identifiable de manière unique indique un point de départ dans ledit flux vidéo pour ladite couche d'amélioration, dans lequel le décodeur est adapté en outre à décoder des informations de résolution de codage du flux vidéo à partir d'un en-tête de séquence dans le flux vidéo, dans lequel divers niveaux de résolution de codage sont organisés sous la forme de couches vidéo multiples, chaque couche vidéo fournissant un niveau différent de résolution spatiale et/ou de résolution temporelle pour les informations vidéo.

13. Dispositif selon la revendication 12, ledit décodeur vidéo étant destiné à décoder des informations vidéo à partir d'une couche d'amélioration temporelle à un deuxième niveau de résolution temporelle ou un troisième niveau de résolution temporelle et/ou à décoder des informations vidéo à partir d'une première couche d'amélioration spatiale à un deuxième niveau de résolution spatiale et audit premier niveau de résolution temporelle, un deuxième niveau de résolution temporelle ou un troisième niveau de résolution temporelle.

14. Dispositif selon la revendication 12 ou 13, comprenant un module de déchiffrement (1004) couplé audit décodeur vidéo, ledit module de déchiffrement étend destiné à déchiffrer chaque couche avec une clé de déchiffrement différente.
